# EUROPEAN PATENT SPECIFICATION

(11) **EP 2 713 353 B1**
(45) Date of publication and mention of the grant of the patent: **20.05.2020**
(21) Application number: 13186090.0
(22) Date of filing: 26.09.2013
(51) Int. Cl.: G08G 1/017, B60R 25/00, G07C 5/00

(54) **System and method for identifying a vehicle**
System und Verfahren zur Identifizierung eines Fahrzeugs
Système et procédé pour l'identification d'un véhicule

(30) Priority: 28.09.2012 IT BO20120534
(43) Date of publication of application: 02.04.2014
(73) Proprietor: I.CAR S.r.l., 40069 Zola Predosa BO (IT)
(72) Inventor: Muriana, Roberto, 40123 Bologna (IT)
(74) Representative: Provvisionato, Paolo

(56) References cited:
- WO-A1-2010/131278
- DE-A1- 4 201 894
- DE-A1-102007 049 795
- FR-A1- 2 902 385
- KR-A- 20040 046 593

## Description

The present invention relates generally to the field of vehicle identification.

Vehicle identification systems based on marking an alphanumerical code on the windows of said vehicle, or on its chassis, are well known. One problem with identification systems based on marking the windows or chassis is that the windows might be replaced, while a chassis marking is susceptible to abrasion. Furthermore, only a small amount of information can be contained in an alphanumerical code of limited length.

Other identification systems, such as that developed by the same applicant and forming the subject matter of European patent EP 2430624, use high frequency tags (short wave or HF at a frequency of between 3 and 30 MHz) or ultra-high frequency tags (UHF at a frequency of between 300 MHz and 3 GHz) onto which information is written which can then be read with an appropriate reader, which is issued for example to authorised repair workshops or to law enforcement agencies. Particularly if supplemented with systems for marking the windows or chassis, such identification systems have good tamperproof properties.

FR 2902385 discloses an identification system of a vehicle with three radio frequency tags: one integrated in the plate, one affixed on a glass and a third on the vehicle registration.

An object of the present invention is to further improve the prior art identification systems and, in particular, of making it more difficult to counterfeit the vehicle identification system, in order to reduce the risk of fraud for insurance purposes or in connection with illegal trade in vehicles which have been involved in crime or counterfeiting. A further object of the invention is to provide an identification system which acts as a deterrent to thieves by making vehicle identification easier and more reliable.

A further object is to create the conditions for simplifying vehicle-related bureaucratic operations (for example for police checks or for car insurance) and technical operations such as testing and assessments, and additionally for verifying the history of maintenance and modifications performed on the motor vehicle, by producing a simple vehicle identification system which is easy to apply, is inexpensive and does not infringe on the privacy of the vehicle owners.

For the purpose of achieving the above-indicated objects and the other objects which will become apparent upon reading the following description, the present invention relates to an electronic vehicle identification system of the type indicated in the accompanying claims. In particular, the system for identifying a vehicle comprises:
- at least one first, preferably HF, radio frequency tag, to be applied, in use, in an easily accessible or visible position of the vehicle for a rapid data check,
- at least one second, preferably HF, radio frequency tag, to be applied to a registration certificate or any other identification document of the vehicle,
- at least one third, preferably UHF, radio frequency tag, to be positioned, in use, in a concealed position on board the vehicle, for preventing unwanted identification thereof and tampering therewith,
- at least one smart card having at least one contact-readable and -writable microchip and/or at least one fourth, preferably HF, radio frequency tag,
- a read and write device for reading and writing vehicle identification data on or to the at least first, second and third radio frequency tags, and on or to the microchip and/or at least one fourth radio frequency tag of the smart card, the read and write device in turn comprising:
- at least one contact read and write member for reading and writing the at least one microchip on the smart card,
- at least one radio frequency read and write member for reading and writing the radio frequency tags, and
- a controller which allows only data which are identical to all or some of the data stored in the smart card to be written at least to the first, second and third radio frequency tags, thereby ensuring the reliability of the data stored in the radio frequency tags.

According to a preferred embodiment of the invention, the first radio frequency tag, to be fixed in an easily accessible or visible position of the vehicle, the second radio frequency tag, to be fixed to a registration certificate or any other identification document of the vehicle, and the fourth radio frequency tag, placed on the smart card, are preferably HF, whereas preferably the third radio frequency tag, to be placed in a concealed position on board the vehicle, is preferably UHF. In this case, the read and write device comprises at least two radio frequency read and write members, consisting of at least one first HF read and write member for reading and writing the first, second and fourth, HF tags, and at least one second read and write member for reading and writing the third, UHF tag.

The present invention further relates to a smart card for identifying a vehicle, comprising a substrate fitted with a contact-readable and -writable microchip and with a, preferably HF, radio frequency tag, which is radio frequency readable and writable, preferably at short range, and on which to store data for identifying a vehicle and its owner. The use of an HF tag is particularly advantageous since it is extremely economical and convenient for this specific use since it does not require power. Owing to the very small dimensions of the device, it is thus possible to incorporate the tag within a smart card, which can be conveniently kept in a normal wallet.

The present invention also relates to a method for providing a vehicle with an identification according to claim 9.

The present invention also relates to a method for modifying the identification data of a vehicle which has been identified using the aforesaid method, comprising the sequential actions of:
- modifying the vehicle identification data on the at least one microchip and on the at least fourth tag of the smart card,
- copying this modified identification data to the at least first, second and third radio frequency tags.

The present system makes it possible also to check the data of the vehicle from the outside, for example when the vehicle is parked, and is thus a valuable aid to law enforcement agencies in preventing and fighting the crimes of theft, robbery, fraud, counterfeiting and the like.

Furthermore, the smart card allows the data of the vehicle to be read instantly, even in the absence of a registration certificate or proof of ownership, thereby facilitating checks on motor vehicles by law enforcement agencies equipped with readers and simplifying checking of data on transfers of ownership and vehicle registration.

As regards insurance, the system is a valuable tool against fraud since it certifies the reliability of the identification data of the vehicle to be insured and makes it possible to obtain more informative details on the vehicle. Said system also improves the quality of client acquisition and of the risk portfolio, allowing more advantageous tariffs to be set up for vehicles equipped with such a system, and makes it possible to quickly ascertain the insurance status of the vehicle, thereby simplifying the operations of assessing damage and compensating victims.

For an optimum result, it is possible to combine this electronic vehicle identification system with a conventional system, such as window markings, in order to form an effective deterrent against the counterfeiting of motor vehicles, and thus against their theft for the purposes of cheating manufacturers, car sellers and citizens.

Further features and advantages will become apparent from the following detailed description of a preferred embodiment of the invention, with reference to the accompanying drawings, given merely by way of non-limiting example, in which:
- Fig. 1 (not to scale) schematically shows a non-limiting example of the identification system according to the present invention,
- Fig. 2 is an enlarged view of a logic card or smart card for use in the present invention,
- Fig. 3 is a schematic block diagram of the read and write device for use in the present invention,
- Fig. 4 is a schematic enlarged view of a portion of the read and write device in Fig. 3 and of an external antenna coupleable thereto,
- Fig. 5 is a side view of the read and write device portion in Fig. 4, viewed in the direction of the arrow V in Fig. 4, and
- Fig. 6 is a perspective view of the external antenna shown in Fig. 4.

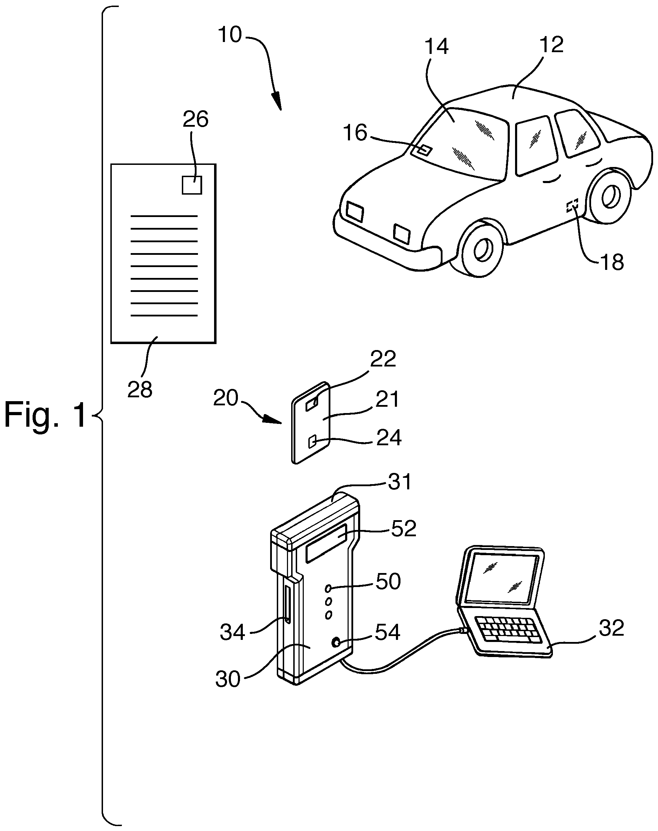

Referring now to Fig. 1, according to an embodiment of the present invention, the system 10 for identifying a vehicle 12 comprises a plurality of radio frequency tags, also known as RFID tags, for storing the data of the vehicle and owner.

A first tag 16 is provided, which is to be fixed, in use, to an easily accessible point of the vehicle 12, preferably on a window 14, so as to be easily identifiable from the outside and readable without the need to access the inside of the vehicle. The tag 16, like all the other radio frequency tags described in the following, is equipped with a microchip and with an antenna for transmitting and receiving data. The tag 16 preferably transmits in HF, or high frequency, so as to be readable and/or writable at close range.

The following are examples of the data that can be stored on this tag: make, model, engine capacity, chassis number, registration number, date of first registration, anagraphical data of the owner, tax code or VAT registration number if the owner is a legal entity and other data. The storage capacity of the tag is therefore preferably 8 kB.

A second tag 26 is provided, which is preferably similar to the tag 16 and is to be permanently applied to the registration certificate 28 of the vehicle or to a similar document, in order to certify the originality of said document. In fact, the tag makes it impossible, or in any case much more difficult, to counterfeit the registration certificate, such counterfeiting being typical in a case of vehicle theft. The tag 26 preferably has a data storage capacity of up to 8 kB, in order to allow storage of the identification data of the vehicle and its owner.

A third tag 18 is also associated with the vehicle and transmits and receives preferably in UHF, or ultra high frequency. This third tag 18 can be read/written at a greater range, depending on the dimensions of the antenna and on the power of the transmitter. Conveniently, this results in a range of between 30 and 100 cm, and said tag can thus advantageously be positioned in a concealed place directly by the owner of the vehicle, in such a way that no-one besides the owner is aware of the exact location thereof. For example, the tag can be fixed beneath one of the seats, within the dashboard, to the internal wall of a glove box, in the boot or in any other position which is out of sight. The greater reading range of the tag makes it possible to read the content thereof even without knowing the exact position. To keep costs down, this third tag 18 contains encrypted data but preferably communicates without an encryption protocol. Furthermore, the capacity of the third tag 18 may be limited to only 64 bits (8 bytes, equivalent to 8 characters), this being sufficient to store, for example, the last eight digits of the vehicle chassis number.

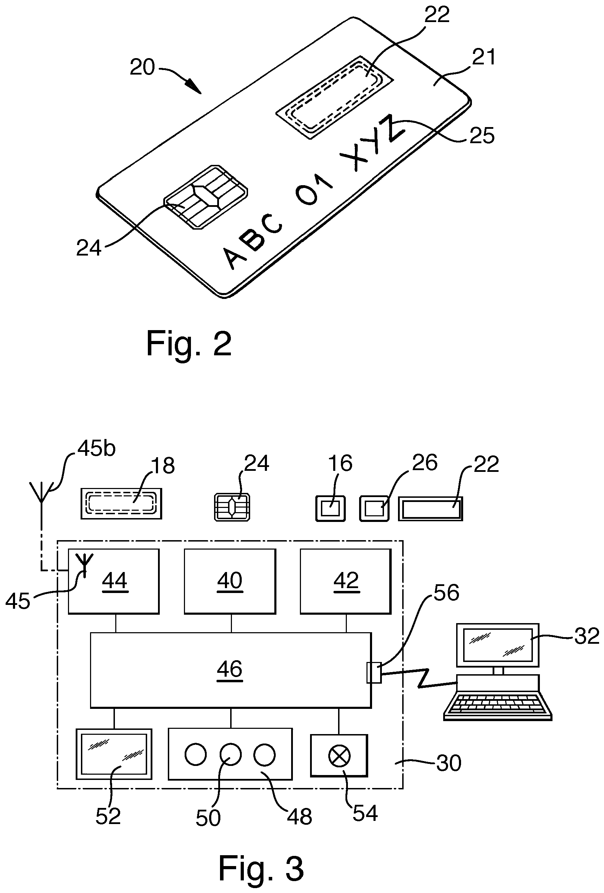

The identification system further comprises a smart card 20 (see Fig. 2) comprising a substrate 21, which is typically made of plastics material or any other suitable material, in which a fourth tag 22 is mounted and which is also equipped with a microchip and HF antenna, in order to be readable and writable at close range. Said substrate is preferably of the type used in electronic passports, for example; that is to say, of the type containing encrypted data, entailing encrypted protocol communication and having a data storage capacity of up to 8 kbytes.

Furthermore, the smart card 20 contains a contact microchip 24 which is equipped with a microprocessor which manages the exchange (reading and/or writing) of data, which are encrypted and exchanged using encrypted protocol communication, and also stores said data. The data storage capacity of the contact microchip 24 is preferably up to 8 kbytes.

A string 25 of alphanumerical characters (such as the name of the owner, the car registration, the place or date of issue, the make of the identification system or any other piece of data) may also be printed on the smart card 20. Also incorporated within said smart card are data relating to the car and/or its owner, such as registration, chassis, name and surname of the owner, as well as the history and condition of the vehicle or other data, including the unique codes of the other tags associated with the same vehicle, such that these are paired to the smart card and cannot be replaced. The smart card is thus a type of identification document for the vehicle and at the same time ensures the security of the entire identification system, as will become clearer in the following.

All the data stored on the tags and on the microchip are preferably encrypted, in order to prevent them from being read without the decryption key.

The identification system 10 further comprises a read and write device 30 equipped with a slot 34 into which the smart card is inserted and with a data input/output device 48 having buttons 50. Furthermore, said device is equipped with a screen 52 and optionally with an acoustic or visual signaller 54 (for example an LED) for signalling the due completion of a requested operation. As will be better explained in the following, the read and write device 30 is in some cases to be connected to a known computer 32 by means of, for example, a USB port 56. The read and write device 30 (a block diagram of which is shown in Fig. 3) comprises:
- a contact read and write member 40 in the form of a contact station which is typical of the contact cards according to the ISO standard, for reading and writing data (using communication which has been encrypted using a proprietary protocol) on or to the microchip 24, when the smart card 20 is inserted into the slot 34 of the read and write device 30,
- at least one HF radio read and write member 42 for reading and writing using communication encrypted using a proprietary protocol on or to the HF tags 16 and 26, arranged respectively in an accessible and visible position on board the vehicle and on the registration certificate or any other identification document of said vehicle, and on or to the tag 22 of the smart card 20, when said smart card is brought into the vicinity of the read and write device or is inserted into the slot 34; preferably, two HF radio read and write members (not shown in the drawings) are provided, one being suitable for writing the tag 22 when the smart card is inserted into the slot 34, in order to allow simultaneous writing of the tag 22 and the microchip 24, and the other having an antenna which is preferably positioned adjacent to an end 31 of the device, for conveniently reading and writing the HF tags 16 and 26 preferably at a distance of between approximately 1 and 3 cm,
- a UHF radio read and write member 44 for reading and writing the third tag 18, using encrypted data and communication which is preferably, but not exclusively, unencrypted; the device is preferably equipped with a UHF internal antenna 45, operating at between approximately 1 and 40 cm, but a UHF external antenna 45b may be coupled thereto and operate preferably at between approximately 1 and 100 cm, although the use of a UHF external antenna also operating at ranges exceeding 100 cm is not excluded; the UHF external antenna 45b thus makes it possible to operate even at considerable ranges, while keeping the read and write device 30 as compact as possible,
- a controller 46.

The controller 46 is programmed in such a way that it is always possible to read the tags 16, 18, 22 and 26 and the microchip 24 using the read and write device 30. It is, however, preferable for the controller to be programmed in such a way that the read and write device 30 has to be connected to the computer 32 in order to be able to enter ex *novo* or modify the data stored in the smart card 20, that is to say, in the microchip 24 and the tag 22.

Ultimately, the controller 46 allows the tags 16, 18 and 26 to be written only as a copy of the data stored in the microchip 24 of the smart card 20. The microchip 24 therefore has a master function, since any modification of the data stored in any of the tags must be preceded by the modification of the data stored in said microchip. At the same time, the tag 22 can be used to certify the data in the microchip 24 and vice versa.

For this purpose, the input/output device 48 is equipped with a limited number of buttons 50 (three in the example shown) for carrying out a limited number of operations, such as reading, copying data from the microchip 24 to the tags 16, 18, 22, 26 and, potentially, deleting all of the data present. For the ex *novo* entry of data on the microchip 24, however, the input device of a standard computer 32 is used.

This type of identification system is extremely tamperproof since, in order to modify the data in any way, it is necessary to be in possession of the smart card 20, which is meant to be in the custody of the vehicle owner and, if possible, not in the vehicle itself. In this manner, in the event of theft of the vehicle for example, the thieves, even if they manage to obtain a read and write device 30, cannot modify the data stored in the tags 16 and 18 affixed to the vehicle itself or in the tag 26, since they are not in possession of the smart card 20.

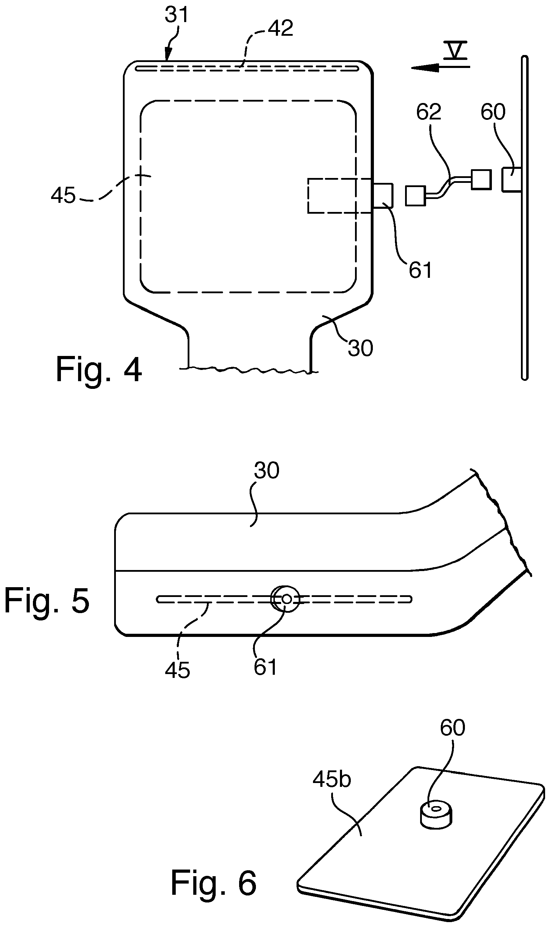

Referring in particular to Fig. 4, 5 and 6, the read and write device 30 can alternatively be connected, according to a preferred embodiment, to a first UHF internal antenna 45, which is extremely compact, or to a second UHF external antenna 45b, which has a greater range. A connector 61 is provided on the read and write device 30, to which there is selectively coupleable a cable 62 for connection to the external antenna 45b. The antenna 45 is of small dimensions and is therefore suitable for being housed inside the read and write device 30, which is thus particularly convenient in use. Should it be necessary to read a UHF tag 18 placed at a distance which exceeds the range of the internal antenna 45, for example of over approximately 0.5 metres, the external antenna 45b can be connected to the read and write device 30, and owing to its larger dimensions also makes it possible to read tags which are positioned 1 m away or more, depending on the type and dimensions of the external antenna 45b. The connector 61 preferably comprises or is associated with an antenna switch, which is either mechanical or electronic and selectively disconnects the internal antenna 45 from the read and write member 44 when the external antenna 45b is connected.

Fig. 4 further indicates the position of the HF read and write antenna 42, which is adjacent to an end 31 of the device 30, thereby improving efficiency and convenience in use by allowing a user to move the HF read and write device 42 closer to the tag to be read or written, and at the same time to read the data collected on the screen 52.

The present invention also relates to a method for providing a vehicle with an identification. According to this method, a qualified operator from an authorized centre verifies that the chassis and registration numbers of the vehicle which are indicated on the registration certificate correspond to the registration and chassis number on the vehicle. Therefore, a first, HF tag 16 and a third, UHF tag 18 are applied to the vehicle and a smart card 20 is provided, which is equipped with a contact-readable and -writable microchip 24 and with a fourth, HF radio frequency tag 22. Furthermore, a third tag 26 is applied to a registration document of the vehicle.

Subsequently, the vehicle identification data are written to the microchip 24 and to the tag 22, preferably, but not necessarily, simultaneously. It is preferable for this operation to be possible only if the read and write device is connected to a computer. Finally, the data entered in the smart card 20 is also copied to the tags 16, 18 and 26. It is also possible to write the data to the tags before these are fixed to the car, without departing from the scope of the present invention.

Similarly, in order to modify the vehicle identification data, the data stored on the tag 22 and on the microchip 24 of the smart card 20 are modified and then the modified data are copied to the tags 16, 18 and 26. In this case too, according to a preferred embodiment of the present invention, to be able to write to the microchip 24 it is necessary to connect the read and write device 30 to a computer 32. This further increases the security of the identification system 10 since, in order to modify the data stored on the tags and on the microchip, it is necessary to be in possession of the smart card 20, of a read and write device equipped with the access keys and with a suitably programmed computer.

For maximum protection, all the HF tags 16, 22 and 26 may be of the type used in electronic passports, but may also be of another type, depending on the specific application.

## Claims

1. Identification system for a vehicle, comprising:
- at least one first, preferably HF, radio frequency tag (16), to be applied in an easily accessible or visible position of the vehicle for a rapid data check,
- at least one second, preferably HF, radio frequency tag (26), to be applied to a registration certificate (28) or any other identification document of the vehicle,
- at least one third, preferably UHF, radio frequency tag (18), to be positioned in a concealed position on board the vehicle, for preventing unwanted identification thereof and tampering therewith,
- at least one smart card (20) having at least one contact-readable and -writable microchip (24) and/or at least one fourth, preferably HF, radio frequency tag (22),
- a read and write device (30) for reading and writing vehicle identification data on or to the at least first, second and third radio frequency tags (16, 18, 26), and on or to the at least one microchip (24) and/or at least one fourth radio frequency tag (22) of the smart card (20), the read and write device (30) in turn comprising:
∘ at least one contact read and write member (40) for reading from and writing to a microchip (24) on the smart card,
∘ at least one radio frequency read and write member (42, 44) for reading from and writing to a radio frequency tags (16, 18, 22, 24), and
∘ at least one controller (46) which allows only data which are identical to all or some of the data stored in the smart card (20) to be written at least to the first second and third radio frequency tags (16, 18, 26).

2. Identification system according to claim 1, wherein the smart card has at least one microchip (24) and at least one fourth radio frequency tag (22).

3. Identification system according to claim 2, wherein the at least first radio frequency tag (16), the at least second radio frequency tag (26), and the at least fourth radio frequency tag (22), placed on the smart card (20), are HF radio frequency tags, and wherein the at least third radio frequency tag (18), to be placed in a concealed position on board the vehicle, is UHF, and wherein the read and write device (30) comprises at least two radio frequency read and write members (42, 44), consisting of at least one first HF read and write member (42) for reading and writing the at least first (16), second (26) and fourth (22), HF radio frequency tags, and at least one second read and write member (44) for reading and writing the at least third, UHF radio frequency tag (18).

4. Identification system for a vehicle according to claim 3, wherein the at least one second read and write member (44) for reading and writing the at least third, UHF radio frequency tag (18) is equipped with a UHF internal antenna (45) .

5. Identification system for a vehicle according to either claim 3 or claim 4, wherein a UHF external antenna (45b) is also provided, which can be coupled to the at least one second read and write member (44) for reading and writing the at least third, UHF radio frequency tag.

6. Identification system for a vehicle according to any of claims 3 to 5, wherein the at least first HF read and write member (42) and the at least one contact read and write member (40) communicate respectively with at least the first, second and fourth, HF radio frequency tags (16, 22, 26) and with the at least one microchip (24) using communication encrypted using a proprietary protocol.

7. Identification system for a vehicle according to any of claims 3 to 6, wherein the at least second UHF read and write member (44) communicates with the at least fourth, UHF radio frequency tag (18) using non-encrypted communication.

8. Identification system for a vehicle according to any of the preceding claims, wherein the identification data stored on the radiofrequency tags (16, 18, 22, 26) and on the microchip (24) are encrypted.

9. Identification system for a vehicle according to any of the preceding claims, comprising at least one first HF read and write member (42) for reading and writing at least the at least first radio frequency tag (16), and at least a second HF read and write member (42) for reading and writing only the at least fourth radio frequency tag (22).

10. Method for providing a vehicle with an identification, comprising the steps of:
- applying at least one first, preferably HF, radio frequency tag (16), in an easily accessible or visible position of the vehicle for a rapid data check,
- applying at least one second, preferably HF, radio frequency tag (26), to the registration document of the vehicle or any other identification document of the vehicle,
- positioning at least one third, preferably UHF, radio frequency tag (18), in a concealed position on board the vehicle, for preventing unwanted identification thereof and tampering therewith,
- setting up at least one smart card (20) having at least one contact-readable and -writable microchip (24) and/or at least one fourth, preferably HF, radio frequency tag (22),
- writing vehicle identification data to the microchip (24) of the smart card (20) or to the fourth, preferably HF, radio frequency tag (22)
- writing only data which are identical to all or some of the data stored in the smart card (20) to the at least first (16), second (26) and third (18) radio frequency tags, wherein the steps of writing the vehicle identification data to the at least first, second and third radiofrequency tags (16, 18, 26), and to the at least one microchip (24) and/or at least one radio frequency tag (22) of the smart card (20) are carried out by a read and write device (30).

11. Method according to claim 10, wherein the smart card has at least one microchip (24) and at least one fourth radio frequency tag (22).

12. Method according to claim 11, wherein the steps of writing the vehicle identification data to the at least fourth radio frequency tag (22) on the smart card (20) and of writing the vehicle identification data to the microchip (24) on the same smart card (20) are carried out substantially simultaneously.

13. Method according to any of claims 11 or 12, wherein the steps of writing the vehicle identification data to the at least fourth radio frequency tag (22) of the smart card (20) and of writing the vehicle identification data to the at least one microchip (24) of the same smart card (20) are allowed only if the read and write device (30) is connected to a computer.

14. Method for modifying the identification data of a vehicle which has been identified using the method in any of claims 11 to 13, comprising the sequential steps of:
- modifying the vehicle identification data on the at least one microchip (24) and on the at least fourth radio frequency tag (22) on the smart card (20),
- copying this modified identification data to the at least first (16) and at least third (18) radio frequency tags.

15. Method for modifying the identification data of a vehicle according to claim 14, wherein the step of copying the identification data from the at least one microchip (24) of the smart card (20) to the at least first (16) and at least third (18) radio frequency tags takes place using an input/output device which receives the data to be copied directly from the microchip (24) of the smart card (20).

## Patentansprüche

1. Identifikationssystem für ein Fahrzeug, umfassend:
- wenigstens ein erstes, vorzugsweise HF-, Funkfrequenzkennzeichen (16) zur Anbringung an einer leicht erreichbaren oder sichtbaren Position des Fahrzeugs für eine schnelle Datenüberprüfung,
- wenigstens ein zweites, vorzugsweise HF-, Funkfrequenzkennzeichen (26) zur Anbringung an einem Registrierungszertifikat (28) oder irgendeinem anderen Identifikationsdokument des Fahrzeugs,
- wenigstens ein drittes, vorzugsweise UHF-, Funkfrequenzkennzeichen (18) zur Positionierung an einer verdeckten Position an Bord des Fahrzeuges, zur Verhinderung einer ungewollten Identifikation davon und unbefugter Hantierung damit,
- wenigstens eine Smartcard (20), die wenigstens einen Kontakt-lesbaren und -schreibbaren Mikrochip (24) und/oder wenigstens ein viertes, vorzugsweise HF-, Funkfrequenzkennzeichen (22) hat,
- eine Lese- und Schreibvorrichtung (30) zum Lesen und Schreiben von Fahrzeugidentifikationsdaten von oder auf dem wenigstens ersten, zweiten und dritten Radiofrequenzkennzeichen (16, 18, 26) und von oder auf dem wenigstens einem Mikrochip (24) und/oder dem wenigstens einen vierten Radiofrequenzkennzeichen (22) der Smartcard (20), wobei die Lese- und Schreibvorrichtung (30) wiederum umfasst:
o wenigstens ein Kontaktlese- und Schreibelement (40) zum Lesen und Schreiben eines Mikrochips (24) an der Smartcard,
o wenigstens ein Funkfrequenzlese- und -schreibelement (42, 44) zum Lesen und Schreiben eines Funkfrequenzkennzeichens (16, 18, 22, 24), und
o wenigstens eine Steuerung (46), die nur solche Daten, die identisch sind zu allen oder einigen der Daten, die in der Smartcard (20) gespeichert sind, wenigstens auf das erste, das zweite und das dritte Funkfrequenzkennzeichen (16, 18, 26) schreiben lässt.

2. Identifikationssystem nach Anspruch 1, wobei die Smartcard wenigstens einen Mikrochip (24) und wenigstens ein viertes Funkfrequenzkennzeichen (22) hat.

3. Identifikationssystem nach Anspruch 2, wobei das wenigstens eine erste Funkfrequenzkennzeichen (16), das wenigstens eine zweite Funkfrequenzkennzeichen (26) und das wenigstens eine vierte Funkfrequenzkennzeichen (22), welches auf der Smartcard (20) platziert ist, HF-Funkfrequenzkennzeichen sind und wobei das wenigstens eine dritte Funkfrequenzkennzeichen (18), das an einer verdeckten Position an Bord des Fahrzeuges zu platzieren ist, ein UHF-Funkfrequenzkennzeichen, die Lese- und Schreibvorrichtung (30) wenigstens zwei Funkfrequenzlese- und -schreibelemente (42, 44) umfasst, die aus wenigstens einem ersten HF-Lese- und - Schreib-Schreibelement (42) zum Lesen und Schreiben des wenigstens einen ersten (16), zweiten (26) und vierten (22) HF-Funkfrequenzkennzeichens und aus wenigstens einem zweiten Lese- und Schreibelement (44) zum Lesen und Schreiben des wenigstens einen dritten UHF-Funkfrequenzkennzeichens (18) besteht.

4. Identifikationssystem für ein Fahrzeug nach Anspruch 3, wobei das wenigstens eine zweite Lese- und Schreibelement (44) zum Lesen und Schreiben des wenigstens einen dritten UHF-Funkfrequenzkennzeichens (18) mit einer internen UHF-Antenne (45) ausgerüstet ist.

5. Identifikationssystem für ein Fahrzeug nach einem der Ansprüche 3 oder 4, wobei auch eine externe UHF-Antenne (45b) vorgesehen ist, die an das wenigstens eine zweite Lese- und Schreibelement (44) zum Lesen und Schreiben des wenigstens einen dritten UHF-Funkfrequenzkennzeichens gekoppelt werden kann.

6. Identifikationssystem für ein Fahrzeug nach einem der Ansprüche 3 bis 5, wobei das wenigstens eine erste HF-Lese- und -Schreibelement (42) und das wenigstens eine Kontakt-Lese- und Schreibelement (40) jeweils wenigstens mit dem ersten, zweiten und vierten HF-Funkfrequenzkennzeichen (16, 22, 26) und mit dem wenigstens einen Mikrochip (24) unter Verwendung verschlüsselter Kommunikation unter Verwendung eines proprietären Protokolls kommunizieren.

7. Identifikationssystem für ein Fahrzeug nach einem der Ansprüche 3 bis 6, wobei das wenigstens eine zweite UHF-Lese- und -Schreibelement (44) mit dem wenigstens einen vierten UHF-Funkfrequenzkennzeichen (18) unter Verwendung einer nichtverschlüsselten Kommunikation kommuniziert.

8. Identifikationssystem für ein Fahrzeug nach einem der voranstehenden Ansprüche, wobei die auf den Funkfrequenzkennzeichen (16, 18, 22, 26) und auf dem Mikrochip (24) gespeicherten Identifikationsdaten verschlüsselt sind.

9. Identifikationssystem für ein Fahrzeug nach einem der voranstehenden Ansprüche, umfassend wenigstens ein erstes HF-Lese- und - Schreibelement (42) zum Lesen und Schreiben wenigstens des wenigstens einen ersten Radiofrequenzkennzeichen (16) und wenigstens ein zweites HF-Lese- und -Schreibelement (42) zum Lesen und Schreiben nur des wenigstens einen vierten Radiofrequenzkennzeichens (22).

10. Verfahren zum Versehen eines Fahrzeuges mit einer Identifikation, umfassend die Schritte:
- Anbringen wenigstens eines ersten, vorzugsweise HF-, Funkfrequenzkennzeichens (16) an einer leicht erreichbaren oder sichtbaren Position des Fahrzeuges für eine schnelle Datenüberprüfung,
- Anbringen wenigstens eines zweiten, vorzugsweise HF-, Funkfrequenzkennzeichens (26) an dem Registrierungsdokument des Fahrzeuges oder irgendeinem anderen Identifikationsdokument des Fahrzeuges,
- Positionierung wenigstens eines dritten, vorzugsweise UHF-, Funkfrequenzkennzeichens (18) an einer verdeckten Position an Bord des Fahrzeuges zum Verhindern einer ungewollten Identifikation davon und einer unbefugten Hantierung damit,
- Einstellen oder Installieren wenigstens einer Smartcard (20), die wenigstens einen Kontakt-lesbaren und -schreibbaren Mikrochip (24) und wenigstens ein viertes, vorzugsweise HF-, Funkfrequenzkennzeichen (22) hat,
- Schreiben von Fahrzeugidentifikationsdaten auf dem wenigstens einen Mikrochip (24) der Smartcard (20) oder auf das vierte, vorzugsweise HF-, Funkfrequenzkennzeichen (22),
- Schreiben nur solche Daten, die identisch sind zu allen oder einigen der Daten, die in der Smartcard (20) gespeichert sind, auf das wenigstens eine erste (16), zweite (26) und dritte (18) Funkfrequenzkennzeichen, wobei die Schritte des Schreibens der Fahrzeugidentifikationsdaten auf das wenigstens eine erste, zweite und dritte Funkfrequenzkennzeichen (16, 18, 26) und auf den wenigstens einen Mikrochip (24) und/oder das wenigstens eine Funkfrequenzkennzeichen (22) der Smartcard (20) mittels einer Lese- und Schreibvorrichtung (30) durchgeführt werden.

11. Verfahren nach Anspruch 10, wobei die Smartcard wenigstens einen Mikrochip (24) und wenigstens ein viertes Funkfrequenzkennzeichen (22) hat.

12. Verfahren nach Anspruch 11, wobei die Schritte des Schreibens von Fahrzeugidentifikationsdaten auf das wenigstens eine vierte Funkfrequenzkennzeichen (22) an der Smartcard (20) und des Schreibens von Fahrzeugidentifikationsdaten auf den Mikrochip (24) an der gleichen Smartcard (20) im Wesentlichen gleichzeitig durchgeführt werden.

13. Verfahren nach einem der Ansprüche 11 oder 12, wobei die Schritte des Schreibens von Fahrzeugsidentifikationsdaten auf das wenigstens eine vierte Radiofrequenzkennzeichen (22) der Smartcard (20) und das Schreiben der Fahrzeugidentifikationsdaten auf den wenigstens einen Mikrochip (24) der gleichen Smartcard (20) nur dann erlaubt werden, wenn die Lese- und Schreibvorrichtung (30) mit einem Computer verbunden ist.

14. Verfahren zum Modifizieren der Identifikationsdaten eines Fahrzeuges, das unter Verwendung des Verfahrens nach einem der Ansprüche 11 bis 13 identifiziert worden ist, umfassend die Schrittfolge des:
- Modifizieren der Fahrzeugidentifikationsdaten auf dem wenigstens einen Mikrochip (24) und auf dem wenigstens einen vierten Radiofrequenzkennzeichen (22) an der Smartcard (20),
- Kopieren dieser modifizierten Identifikationsdaten zu dem wenigstens einen ersten (16) und wenigstens einen dritten (18) Radiofrequenzkennzeichen.

15. Verfahren zum Modifizieren der Identifikationsdaten eines Fahrzeuges nach Anspruch 14, wobei der Schritt des Kopierens der Identifikationsdaten von dem wenigstens einen Mikrochip (24) der Smartcard (20) auf das wenigstens eine erste (16) und das wenigstens eine dritte (18) Radiofrequenzkennzeichen unter Verwendung einer Eingabe-/Ausgabevorrichtung stattfindet, die die zu kopierenden Daten direkt von dem Mikrochip (24) der Smartcard (20) erhält.

## Revendications

1. Système d'identification pour un véhicule, comprenant :
- au moins une première balise de radiofréquence (16), de préférence HF, à appliquer, en utilisation, dans une position visible ou facilement accessible du véhicule en vue d'une vérification de données rapide,
- au moins une seconde balise de radiofréquence (26), de préférence HF, à appliquer sur une attestation d'enregistrement (28) ou n'importe quel autre document d'identification du véhicule,
- au moins une troisième balise de radiofréquence (18), de préférence UHF, à positionner, en utilisation, dans une position dissimulée à bord du véhicule, pour empêcher une identification non désirée de celui-ci et une utilisation abusive de celui-ci,
- au moins une carte intelligente (20) ayant au moins une micropuce (24) pouvant être lue et écrite par contact et/ou au moins une quatrième balise de radiofréquence (22), de préférence HF,
- un dispositif de lecture et d'écriture (30) pour lire et écrire des données d'identification du véhicule sur ou vers les au moins première, seconde et troisième balises de radiofréquence (16,18,26), et sur ou vers l'au moins une micropuce (24) et/ou au moins une quatrième balise de radiofréquence (22) de la carte intelligente (20), le dispositif de lecture et d'écriture (30) comprenant à son tour :
- au moins un élément de lecture et d'écriture par contact (40) pour lire et écrire sur au moins une micropuce (24) sur la carte intelligente,
- au moins un élément de lecture et d'écriture de radiofréquence (42,44) pour lire et écrire sur une balise de radiofréquence (16,18,22,24), et
- au moins un contrôleur (46) qui permet seulement aux données qui sont identiques à toutes ou à certaines des données mémorisées dans la carte intelligente (20) d'être écrites au moins sur la première seconde et troisième balise de radiofréquence (16,18,26).

2. Système d'identification selon la revendication 1, dans lequel la carte intelligente possède au moins une micropuce (24) et au moins une quatrième balise de radiofréquence (22).

3. Système d'identification selon la revendication 2, dans lequel l'au moins première balise de radiofréquence (16), l'au moins seconde balise de radiofréquence (26) et l'au moins quatrième balise de radiofréquence (22), placées sur la carte intelligente (20) sont des balises de radiofréquence HF, et dans lequel l'au moins troisième balise de radiofréquence (18) à placer dans une position dissimulée à bord du véhicule est UHF, et dans lequel le dispositif de lecture et d'écriture (30) comprend au moins deux éléments de lecture et d'écriture (42,44) de radiofréquence, consistant en au moins un premier élément de lecture et d'écriture HF (42) pour lire et écrire l'au moins première (16), seconde (26) et quatrième (22) balises de radiofréquence HF et au moins un second élément de lecture et d'écriture (44) pour lire et écrire l'au moins troisième balise de radiofréquence UHF (18).

4. Système d'identification pour un véhicule selon la revendication 3, dans lequel l'au moins un second élément de lecture et d'écriture (44) pour lire et écrire au moins la troisième balise de radiofréquence UHF (18) est équipé d'une antenne interne UHF (45).

5. Système d'identification pour un véhicule selon l'une ou l'autre des revendications 3 ou 4, dans lequel une antenne externe UHF (45b) est aussi prévue, qui peut être couplée à l'au moins un second élément de lecture et d'écriture (44) pour lire et écrire au moins la troisième balise de radiofréquence UHF.

6. Système d'identification pour un véhicule selon l'une ou l'autre des revendications 3 à 5, dans lequel l'au moins premier élément de lecture et d'écriture HF (42) et l'au moins un élément de lecture et d'écriture par contact (40) communiquent respectivement avec au moins la première, la seconde et la quatrième balises de radiofréquence HF (16,22,26) et avec l'au moins une micropuce (24) en utilisant une communication cryptée en utilisant un protocole propriétaire.

7. Système d'identification pour un véhicule selon une quelconque des revendications 3 à 6, dans lequel l'au moins second élément de lecture et d'écriture UHF (44) communique avec l'au moins quatrième balise de radiofréquence UHF (18) en utilisant une communication non cryptée.

8. Système d'identification pour un véhicule selon une quelconque des revendications précédentes, dans lequel les données d'identification mémorisées sur les balises de radiofréquence (16,18,22,26) et sur la micropuce (24) sont cryptées.

9. Système d'identification pour un véhicule selon une quelconque des revendications précédentes, comprenant au moins un premier élément de lecture et d'écriture HF (42) pour lire et écrire au moins l'au moins première balise de radiofréquence (16), et au moins un second membre de lecture et d'écriture HF (42) pour lire et écrire seulement l'au moins quatrième balise de radiofréquence (22).

10. Procédé de fourniture d'un véhicule avec une identification, comprenant les étapes consistant à :
- appliquer au moins une première balise de radiofréquence (16), de préférence HF, dans une position visible et facilement accessible du véhicule en vue d'une vérification de données rapide,
- appliquer au moins une seconde balise de radiofréquence (26), de préférence HF, sur le certificat d'enregistrement du véhicule ou n'importe quel autre document d'identification du véhicule,
- positionner au moins une troisième balise de radiofréquence (18), de préférence UHF, dans une position dissimulée à bord du véhicule, pour empêcher une identification non souhaitée de celui-ci et une utilisation abusive de celui-ci,
- établir au moins une carte intelligente (20) ayant au moins une micropuce pouvant être lue et écrite par contact (24) et au moins une quatrième balise de radiofréquence, de préférence HF (22),
- écrire des données d'identification de véhicule sur la micropuce (24) de la carte intelligente (20) ou sur au moins la quatrième balise de radiofréquence (22), de préférence HF,
- écrire uniquement les données qui sont identiques à une partie ou toutes les données mémorisées dans la carte intelligente (20) sur les au moins première (16), seconde (26) et troisième (18) balises de radiofréquence,
dans lequel les étapes d'écriture des données d'identification de véhicule sur au moins la première (16), la seconde (26) et la troisième (18) balises de radiofréquence (16,18,26), et sur au moins une micropuce (24) et/ou au moins une balise de radiofréquence (22) de la carte intelligente (20) sont effectuées par un dispositif de lecture et d'écriture (30).

11. Procédé selon la revendication 10, dans lequel la carte intelligente possède au moins une micropuce (24) et au moins une quatrième balise de radiofréquence (22) .

12. Procédé selon la revendication 11, dans lequel les étapes d'écriture des données d'identification du véhicule sur l'au moins quatrième balise de radiofréquence (22) sur la carte intelligente (20) et d'écriture des données d'identification du véhicule sur la micropuce (24) sur la même carte intelligente (20) sont effectuées substantiellement simultanément.

13. Procédé selon une quelconque des revendications 11 ou 12, dans lequel les étapes d'écriture des données d'identification du véhicule sur l'au moins quatrième balise de radiofréquence (22) de la carte intelligente (20) et d'écriture des données d'identification du véhicule sur au moins une micropuce (24) de la même carte intelligente (20) sont autorisées seulement si le dispositif de lecture et d'écriture (30) est connecté à un ordinateur.

14. Procédé de modification des données d'identification d'un véhicule qui a été identifié en utilisant le procédé selon une quelconque des revendications 11 à 13, comprenant les étapes séquentielles consistant à :
- modifier les données d'identification du véhicule sur au moins une micropuce (24) et sur l'au moins quatrième balise de radiofréquence (22) sur la carte intelligente (20),
- copier ces données d'identification modifiées sur l'au moins première (16) et l'au moins troisième (18) balises de radiofréquence.

15. Procédé de modification des données d'identification d'un véhicule selon la revendication 14, dans lequel l'étape de copie des données d'identification à partir d'au moins une micropuce (24) de la carte intelligente (20) sur au moins la première (16) et au moins la troisième (18) balises de radiofréquence a lieu en utilisant un dispositif d'entrée/sortie qui reçoit les données à copier directement à partir de la micropuce (24) de la carte intelligente (20).
